# EUROPÄISCHE PATENTSCHRIFT

(11) **EP 0 992 113 B1**
(45) Veröffentlichungstag und Bekanntmachung des Hinweises auf die Patenterteilung: **05.11.2003**
(21) Anmeldenummer: 98934874.3
(22) Anmeldetag: 09.06.1998
(51) Int. Cl.: H03K 3/30, H05B 41/288

(54) **HALBBRÜCKENANSTEUERUNG OHNE KOLLEKTOR-VORSTROMSPITZE**
HALF BRIDGE CIRCUIT DRIVE WITHOUT COLLECTOR BIAS CURRENT PEAK
COMMANDE A DEMI-PONT SANS PICS DE COURANT DE POLARISATION AU COLLECTEUR

(30) Priorität: 03.07.1997 DE 19728295
(43) Veröffentlichungstag der Anmeldung: 12.04.2000
(73) Patentinhaber: Patent-Treuhand-Gesellschaft für elektrische Glühlampen mbH, 81543 München (DE)
(72) Erfinder: FRANCK, Felix, D-80333 München (DE)
(86) Internationale Anmeldenummer: DE9801561
(87) Internationale Veröffentlichungsnummer: WO99001934

(56) Entgegenhaltungen:
- DE-A- 2 553 266
- GB-A- 2 016 846
- GB-A- 2 086 164
- US-A- 5 309 350

## Beschreibung

Die vorliegende Erfindung bezieht sich auf eine Betriebsschaltung für eine Last, insbesondere eine Niederdruckentladungslampe.

Dabei geht die Erfindung aus von einer Oszillatorschaltung zum Hochfrequenzbetrieb der Last, wobei die Schaltung mit einer Spannung mit dominantem Gleichanteil versorgt wird. Konkret wird eine freischwingende Oszillatorschaltung betrachtet, bei der eine Bipolartransistorhalbbrücke durch eine Schaltsteuereinrichtung so angesteuert wird, dass das Ein- und Ausschalten der Bipolartransistoren das Potential eines Brückenabgriffs mit der Betriebsfrequenz oszillieren lässt. Dazu wird bei freischwingenden Oszillatorschaltungen der Laststrom durch die Schaltsteuereinrichtung zum Schalten bzw. Steuern der Bipolartransistoren rückgekoppelt.

Ein wesentliches Problem bei der Auslegung und auch - hinsichtlich der Toleranzen - bei der Produktion einer solchen Schaltung besteht in der gleichzeitigen Berücksichtigung von drei Funktionskriterien, nämlich der Funkentstörung, der Schaltentlastung der Transistoren bzw. der Verlustminimierung und schließlich der in die Last eingekoppelten Leistung. Die Verkopplung dieser drei Kriterien ist bei konventionellen Schaltungen sehr ausgeprägt. Eine Berücksichtigung aller drei Gesichtspunkte gleichzeitig ist entweder nur nach einer sehr komplexen Schaltungsauslegung und bei entsprechend geringen Toleranzen hinsichtlich der verschiedenen elektrischen Größen und Betriebsparameter oder häufig auch überhaupt nicht zufriedenstellend möglich.

Der Erfindung liegt das technische Problem zugrunde, die beschriebene Schaltung so weiter zu entwickeln, dass die Auslegung der Schaltung hinsichtlich der genannten Kriterien vereinfacht und die Toleranzen hinsichtlich der elektrischen Größen und Betriebsparameter vergrößert werden.

Dieses Problem wird erfindungsgemäß gelöst durch eine freischwingende Oszillatorschaltung zum Betreiben einer Last mit einer Bipolartransistorhalbbrücke, die zwischen den Polen einer Versorgungsspannung angeordnet ist, und mit einer Schaltsteuereinrichtung, wobei die Schaltsteuereinrichtung zwei Ausgänge zur rückkoppelnden Übertragung des Laststromes auf die Basen der Bipolartransistoren aufweist, dadurch gekennzeichnet, dass die Basisanschlussleitungen der Bipolartransistoren direkt durch einen Basisbrückenkondensator miteinander verbunden sind, und/oder dass die Ausgänge der Schaltsteuereinrichtung durch einen Basisbrückenkondensator miteinander verbunden sind.

Die erfindungsgemäße Schaltung zielt mit ihrem Lösungsansatz besonders auf den Aspekt der Kollektorvorstromspitze. Dabei handelt es sich um einen unerwünschten Kollektoremitterstrom, der zeitlich kurz aber mit relativ großer Stärke fließt, wenn die Basis eines betrachteten Schalttransistors zu früh angesteuert, der Transistor also zu früh in den leitenden Zustand geschaltet wird. Zu früh bedeutet dabei, dass die Kollektoremitterspannung im Potentialhub der letzten Oszillationshalbperiode nicht vollständig verschwunden ist und somit bei zu früh eingeschaltetem Transistor noch einen kurzen Stromstoß erzeugt. Bei zeitlich korrektem, also erst bei Verschwinden der Kollektoremitterspannung beginnendem Einschalten des Transistors fließt überhaupt kein positiver Kollektoremitterstrom und nur ein sehr viel kleinerer Basiskollektorstrom.

Diese Kollektorvorstromspitze kann vor allem bei verlustminimierten Basisansteuerungen auftreten, bei denen der Solleinschaltzeitpunkt sehr kurz nach dem Verschwinden der Kollektoremitterspannung liegt und entsprechend kleine Schwankungen der elektrischen Größen oder Betriebsparameter bereits als Ursache ausreichen.

Durch den erfindungsgemäß hinzugefügten sogenannten "Basisbrückenkondensator" zwischen den Basisanschlußleitungen der Bipolartransistoren wird nun der möglicherweise zu früh einsetzende Strom zur Basisaufsteuerung bzw. Transistoreinschaltung sozusagen "abgesaugt". Dafür sorgt der bei zu frühem Beginn des Einschaltstroms noch nicht ganz ent- bzw. aufgeladene Basisbrückenkondensator.

Zur Veranschaulichung kann man sich klarmachen, daß die Anschlußpunkte des Basisbrückenkondensators an den Basisanschlußleitungen durch die im allgemeinen niedrigen Impedanzen der Schaltsteuereinrichtung und eventueller weiterer Basisansteuerungsschaltungen im Vergleich zu dem Spannungshub der Oszillatorschaltung jeweils im wesentlichen auf einem Potential der Versorgungsspannung bzw. auf dem Potential des Mittenabgriffs der Bipolartransistorbrücke liegen. Deswegen ist der Zeitpunkt der Identität zwischen dem Potential des Mittenabgriffs und dem jeweiligen Potential der Versorgungsspannung praktisch gleichzusetzen mit dem Zeitpunkt der vollständigen Ent- bzw. Aufladung des Basisbrückenkondensators.

Auch wenn die Schaltsteuereinrichtung einen möglicherweise etwas verfrühten Einschaltstrom liefert, ist somit sichergestellt, daß der betrachtete Transistor spannungsfrei (bezüglich der Kollektoremitterspannung) und damit verlustoptimiert geschaltet wird.

Durch die Vermeidung des impulsartigen Stromstoßes der Kollektorvorstromspitze ergibt sich im übrigen auch eine verbesserte elektromagnetische Verträglichkeit.

Die durch die dargestellte Funktionsweise deutlich entschärften Vorgaben des Kriteriums Schaltentlastung bei der Auslegung der Gesamtschaltung sorgen für erleichterte und verbesserte Möglichkeiten hinsichtlich der beiden anderen genannten Kriterien Funkentstörung und Leistungsauslegung in der Last. Anders ausgedrückt kann durch den beschriebenen Schutzmechanismus des endungsgemäßen Basisbrückenkondensators insbesondere die Leistung der Last sozusagen ",entkoppelt" von den beiden anderen Kriterien durch entsprechende Dimensionierung der relevanten Bauteile eingestellt werden.

Die Schaltsteuereinrichtung ist bevorzugt ein Steuertransformator, dessen Sekundärwicklungsströme die Transistorbasen ansteuern.

Die Anschlusspunkte des Basisbrückenkondensators können direkt an der jeweiligen Transistorbasis oder direkt am basisseitigen Ausgang der Schaltsteuereinrichtung, etwa an einer Transformatorsekundärwicklung, angeordnet sein. Die zweite Lösung ist dann zu bevorzugen, wenn zwischen der Schaltsteuereinrichtung und der Transistorbasis eine relativ hochohmige Ansteuerung zwischengeschaltet ist, weil sich sonst durch den Basisbrückenkondensator ein zu großer Wechselstromkurzschlusseffekt bei der Betriebsschaltfrequenz unmittelbar zwischen den Basisanschlüssen ergeben könnte. Es sind auch zwei Kondensatoren denkbar, die jeweils in einer der beiden Verschaltungen angeordnet sind. Generell ist die Erfindung nicht auf einen einzigen Basisbrückenkondensator eingeschränkt, insbesondere bei einer Vollbrückenschaltung.

Es hat sich herausgestellt, dass die (Gesamt-)Kapazität des oder der Basisbrückenkondensatoren am besten ausgerichtet wird an der (Gesamt-)Kapazität des oder der konventionellen Trapezkondensatoren der Gesamtschaltung. Dabei wird hier unter Trapezkondensator ein zu einer Kollektoremitterstrecke eines Schalttransistors (effektiv) parallel liegender Kondensator zur Abschrägung - im Potentialzeitdiagramm - der Potentialsprünge des Brückenabgriffs durch die entsprechenden Umladevorgänge verstanden. Ein bevorzugter Bereich für die Kapazität des Basisbrückenkondensators beträgt
dabei 10% bis 100% der Trapezkondensatorkapazität und insbesondere 10% bis 50% dieser Kapazität.

Ein bevorzugter Bereich für die Summe aus der genannten (Gesamt-)Trapezkondensatorkapazität und der (Gesamt-)Kapazität des oder der Basisbrückenkondensatoren liegt zwischen 680 pF bis 2,2 nF. Dies gilt für einen breiten Bereich von Lastleistungen zwischen einigen Watt und wenigen Kilowatt.

Die Erfindung wird im folgenden weiter erläutert anhand eines bevorzugten Ausführungsbeispiels, wobei alle dabei offenbarten Einzelmerkmale auch für sich oder in anderen Kombinationen erfindungswesentlich sein können.

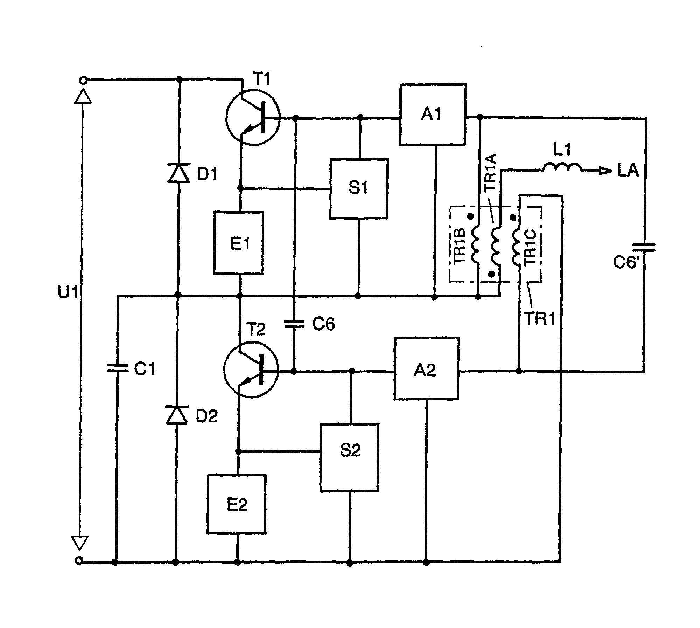

Die Figur zeigt einen schematischen Schaltungsplan einer erfindungsgemäßen Oszillatorschaltung. Auf der linken Seite wird eine Versorgungsspannung U1 mit dominantem Gleichanteil, z.B. aus einem Gleichrichter eingespeist, wobei die untere Linie in dem Diagramm als Massepotential und die obere Linie als demgegenüber positives Potential zu verstehen ist. Die Versorgungsspannung U1 wird an eine Halbbrücke aus zwei Bipolartransistoren T1 und T2 gegeben, deren Mittenabgriff nach rechts über eine Lampendrossel L1 zur Last LA geführt ist.

Durch alternierendes Leiten der beiden Transistoren T1 und T2 oszilliert das Potential des Mittenabgriffs zwischen dem positiven Versorgungspotential und Masse, woraus sich die Hochfrequenzleistungsversorgung der Last LA ergibt. Dabei ist die Last LA auf ihrer anderen Seite gewöhnlich mit Masse, in einigen Fällen aber auch mit dem positiven Versorgungszweig verbunden.

Der Oszillationsbetrieb der Halbbrückenschaltung ergibt sich durch eine positive Rückkopplung des Hochfrequenzlaststroms über den eingezeichneten Steuertransformator TR1(TR1A, TR1B/ TR1C). Die Ausgänge der Sekundärwicklungen TR1B und TR1C des Steuertransformators TR1 sind mit den Basisanschlüssen der Halbbrückenbipolartransistoren T1, T2 verbunden; durch die gegensinnigen Sekundärwicklungen des Steuertransformators ergibt sich die alternierende Ansteuerung der beiden Bipolartransistoren. Zwischen dem Sekundärwicklungsausgang und dem Basiseingang des jeweiligen Bipolartransistors T1 bzw. T2 liegt eine als Kästchen eingezeichnete Ansteuerungsschaltung A1 bzw. A2, die Widerstände, Induktivitäten, Dioden und Kapazitäten enthalten kann. Die genaue Ausführung dieser Ansteuerungsschaltung ist für die Erfindung von untergeordneter Bedeutung und kann dem Stand der Technik entsprechen.

Weiterhin sind die Bipolartransistoren in üblicher Weise verschaltet. Zunächst liegt der Emitterkollektorstrecke jedes Transistors eine Freilaufdiode D1 bzw. D2 antiparallel, deren Funktion bekannt ist und hier nicht weiter beschrieben wird.

Weiterhin ist dem Emitter jedes der beiden Bipolartransistoren T1 und T2 eine Emitterbeschaltung E1 bzw. E2 vorgeschaltet, deren genauer Aufbau hier wiederum nicht von besonderer Bedeutung ist. Es kann sich z.B. um einen einfachen Ohm'schen Emitterwiderstand handeln. Es können aber auch gleichrichtende Schottky- oder Bipolardioden und/oder Kapazitäten enthalten sein.

Parallel zu der Basisemitterstrecke jedes der beiden Bipolartransistoren T1 und T2 liegt eine Emitterbasisschutzbeschaltung S1 bzw. S2, die wiederum aus Widerständen, Dioden und/oder Zenerdioden bestehen kann. Auch hier ist der genaue Aufbau für die hier behandelte Erfindung nicht wesentlich.

Mit C1 bezeichnet ist ein im vorliegenden Beispiel zu der Emitterkollektorstrecke des Transistors T2 parallel liegender Trapezkondensator, der ebenfalls aus dem Stand der Technik bekannt ist. Er könnte auch parallel zur Emitterkollektorstrecke des Transistors T1 liegen, oder es könnte jeweils ein paralleler Trapezkondensator vorgesehen sein. Die Funktion dieses Trapezkondensators C1 besteht darin, nach dem Ausschalten eines der beiden Bipolartransistoren T1 und T2 für einen nicht zu sprunghaften Potentialanstieg des Mittenabgriffs zu sorgen, indem die entsprechende Flanke im Potentialzeitdiagramm durch die endliche Aufladezeit des Kondensators abgeschrägt wird.

Bei dem hier beschriebenen Ausführungsbeispiel sind zwei Basisbrückenkondensatoren C6 und C6' vorgesehen, wobei der Kondensator C6 direkt die Basisanschlüsse der beiden Brückenbipolartransistoren T1 und T2 und der Kondensator C6' die basisanschlußseitigen Ausgänge der Sekundärwicklungen TR1B und TR1C des Steuertransformators TR1 verbindet. Grundsätzlich kann der Basisbrückenkondensator C6 unmittelbar an den Basisanschlüssen der Bipolartransistoren T1 und T2 angeschlossen sein, also in der in der Figur linken Position des Basisbrückenkondensators.

Ist der Basisbrückenkondensator also an Position C6 angeordnet, kann jedoch - insbesondere bei relativ hohen Impedanzen der als Kästchen eingezeichneten Ansteuerschaltungen A1 und A2 - die Hochfrequenzkurzschlußfunktion der Kapazität C6 zwischen den Basisanschlüssen der Transistoren T1 und T2 stören, weil C6 das Ausschalten der Transistoren T1 und T2 verlangsamt. Schaltet z.B. der Transistor T2 aus, wird sein Basispotential unter sein Emitterpotential gezogen, aber direkt anschließend aufgrund des Potentialhubs des Halbbrückenmittelpunktes über die Sekundärwicklung TR1B, die Ansteuerung A1 und den Kondensator C6 wieder nach oben bewegt.

Allerdings ist die Zeitsteuerung der Einschaltpunkte der Transistoren mit der Schaltposition C6 exakter als mit der Position von C6'. Liegt demnach der Auslegungsschwerpunkt beim Schaltungsentwurf mehr auf der Seite der Abschaltungsgeschwindigkeit der Transistoren, ist die Position von C6' zu bevorzugen, liegt der Auslegungsschwerpunkt dagegen mehr bei der Einschaltzeitsteuerung, ist die Position von C6 günstiger.

Es ist auch möglich, wie in der Figur gezeichnet, jeweils einen Kondensator in jeder der beiden beschriebenen Lagen vorzusehen, wobei die Kapazitäten zu einer effektiven Gesamtbasisbrückenkondensatorkapazität addiert werden müssen.

Die Reihenschaltung aus Ansteuerungsschaltung A1 und Sekundärwicklung TR1B bzw. aus Ansteuerungsschaltung A2 und Sekundärwicklung TR1C ist jeweils relativ niederohmig (zusammen beispielsweise etwa 30 Ohm). Dadurch ist der Basisbrückenkondensator effektiv zwischen den Mittenabgriff und den unteren Versorgungszweig, also Masse, geschaltet, wobei für den Basisbrückenkondensator C6' die Impedanz der Anteuerungsschaltungen A1 und A2 wegfällt. Dementsprechend bewirkt eine Potentialänderung des Mittenabgriffs, also des Punktes zwischen den Diode D1 und D2 und am Kollektor des unteren Bipolartransistors T2 eine Auf- bzw. Entladung des Basisbrückenkondensators C6 und/oder C6'. Dabei fließt der Strom in einer solchen Richtung, daß der im Oszillationsbetrieb als nächstes einzuschaltende Transistor erst angesteuert wird, wenn die Potentialänderung des Mittenabgriffs abgeschlossen ist. Man kann sich dazu vorstellen, daß die Umladevorgänge der Basisbrückenkondensatoren alle möglicherweise vorzeitig auftretenden Basisaufsteuerungsströme absaugen, solange der betreffende Transistor noch nicht (kollektoremitter-)spannungsfrei ist.

Eine weitere vorteilhafte Wirkung der Basisbrückenkondensatoren liegt - insbesondere bei niedrigen Impedanzen der Ansteuerungen A1 und A2 - darin, daß ein überschüssiger Basisausräumstrom, der erhebliche Ausschaltverluste der Transistoren verursacht, ebenso wie der oben beschriebene vorzeitige Basisaufsteuerungsstrom "abgesaugt" wird. Es handelt sich im Grunde um die analoge Funktion zur geschilderten Verhinderung der Kollektorvorstromspitze, jedoch mit umgekehrtem Stromvorzeichen in der Basis und zum Ausschalt- statt zum Einschaltzeitpunkt.

Dadurch kann die Auslegung der Schaltung insbesondere hinsichtlich der Sättigung des Steuertransformators TR1 bewußt auf eine leicht verfrühte Basisansteuerung ausgelegt werden, was dann mit Hilfe des oder der Basisbrückenkondensatoren zu einem toleranzunempfindlichen sowie zeitgenauen und dabei spannungsfreien Einschalten der Bipolartransistoren T1 und T2 führt. Insbesondere wird die eingangs beschriebene Kollektorvorstromspitze wirkungsvoll vermieden.

Außerdem bewirkt die Verbindung zwischen dem oder den Basisbrückenkondensatoren C6 bzw. C6' und dem Steuertransformator TR1, daß letzterer während der Potentialänderung am Mittenabgriff der Halbbrücke in Sättigung gehalten wird. Der Umladestrom des oder der Basisbrückenkondensatoren C6 bzw. C6' (und auch des Trapezkondensators C1) wird durch die Lampendrossel L1 eingeprägt. Dabei fließt der Anteil dieses Stromes, der den oder die Basisbrückenkondensatoren C6 bzw. C6' umlädt, auch durch alle drei Wicklungen des Steuertransformators TR1. Er trägt also dreimal zur Magnetisierung der Hauptinduktivität des Steuertransformators TR1 bei.

Durch die bereits beschriebene relativ niederohmige Ankopplung der beiden Pole des oder der Basisbrückenkondensatoren C6 bzw. C6' an den Halbbrükkenmittenabgriff bzw. an den Massezweig der Versorgungsspannung ergibt sich schließlich, daß die Funktion des konventionellen Trapezkondensators C1 von den erfindungsgemäßen Basisbrückenkondensatoren C6 bzw. C6' jeweils oder gemeinsam mit übernommen wird. Dementsprechend sollte die Kapazität C1 bei Hinzufügung des oder der Basisbrückenkondensatoren C6 bzw. C6' um die (Gesamt-)Basisbrückenkondensatorkapazität verringert werden. Im Prinzip könnte der konventionelle Trapezkondensator C1 auch ganz weggelassen werden, wobei sich jedoch aus den oben bereits angeführten bevorzugten Größenverhältnissen der Kapazitäten ergibt, daß die erfindungsgemäße Basisbrückenkondensatorkapazität im allgemeinen kleiner als die optimale Kapazität eines konventionellen Trapezkondensators ist.

## Patentansprüche

1. Freischwingende Oszillatorschaltung zum Betreiben einer Last (LA) mit einer Bipolartransistorhalbbrücke (T1, T2), die zwischen den Polen einer Versorgungsspannung (U1) angeordnet ist, und mit einer Schaltsteuereinrichtung (TR1), wobei die Schaltsteuereinrichtung (TR1) zwei Ausgänge zur rückkoppelnden Übertragung des Laststromes auf die Basen der Bipolartransistoren (T1, T2) aufweist, **dadurch gekennzeichnet, dass** die Basisanschlussleitungen der Bipolartransistoren (T1, T2) direkt durch einen Basisbrückenkondensator (C6) miteinander verbunden sind, und/oder dass die Ausgänge der Schaltsteuereinrichtung (TR1) durch einen Basisbrückenkondensator (C6') miteinander verbunden sind.

2. Schaltung nach Anspruch 1, bei der die Schaltsteuereinrichtung ein Steuertransformator ist.

3. Schaltung nach Anspruch 1, bei der die Kapazität des bzw. der Basisbrückenkondensatoren (C6, C6') 10 bis 100 % der Kapazität eines bzw. mehrerer Trapezkondensatoren (C1) ist.

4. Schaltung nach Anspruch 1, bei der die Kapazität des bzw. der Basisbrückenkondensatoren (C6, C6') 10 bis 50 % der Kapazität eines bzw. mehrerer Trapezkondensatoren (C1) ist.

5. Schaltung nach Anspruch 1, bei der die Summe der Kapazitäten des bzw. der Basisbrückenkondensatoren (C6, C6') und eines bzw. mehrerer Trapezkondensatoren (C1) 680 pF bis 2,2 nF beträgt.

6. Schaltung nach Anspruch 1, bei der die Last (LA) eine Niederdruckentladungslampe ist.

## Claims

1. Free-running oscillator circuit for operating a load (LA) having a bipolar transistor half-bridge (T1, T2), which is arranged between the poles of a supply voltage (U1), and having a switching control device (TR1), with the switching control device (TR1) having two outputs for transmitting the load current, with feedback, to the bases of the bipolar transistors (T1, T2), **characterized in that** the base connecting lines of the bipolar transistors (T1, T2) are directly connected to one another by means of a base bridging capacitor (C6), and/or **in that** the outputs of the switching control device (TR1) are connected to one another by means of a base bridging capacitor (C6').

2. Circuit according to Claim 1, in which the switching control device is a control transformer.

3. Circuit according to Claim 1, in which the capacitance of the base bridging capacitor or capacitors (C6, C6') is 10 to 100% of the capacitance of one or more trapezoidal capacitors (C1).

4. Circuit according to Claim 1, in which the capacitance of the base bridging capacitor or capacitors (C6, C6') is 10 to 50% of the capacitance of one or more trapezoidal capacitors (C1).

5. Circuit according to Claim 1, in which the sum of the capacitances of the base bridging capacitor or capacitors (C6, C6') and of one or more trapezoidal capacitors (C1) is 680 pF to 2.2 nF.

6. Circuit according to Claim 1, in which the load (LA) is a low-pressure discharge lamp.

## Revendications

1. Circuit oscillateur libre pour faire fonctionner une charge (LA), comportant un demi-pont de transistors bipolaires (T1, T2), qui est placé entre les pôles d'une tension d'alimentation (U1), et un dispositif de commande de commutation (TR1), le dispositif de commande de commutation (TR1) comportant deux sorties pour la transmission rétroactive du courant de charge aux bases des transistors bipolaires (T1, T2), **caractérisé par le fait que** les lignes de raccordement de base des transistors bipolaires (T1, T2) sont reliées directement entre elles par un condensateur de pont de base (C6) et/ou que les sorties du dispositif de commande de commutation (TR1) sont reliées entre elles par un condensateur de pont de base (C6').

2. Circuit selon la revendication 1, dans lequel le dispositif de commande de commutation est un transformateur de commande.

3. Circuit selon la revendication 1, dans lequel la capacité du ou des condensateurs de pont de base (C6, C6') vaut 10 à 100 % de la capacité d'un ou plusieurs condensateurs trapèzes (C1).

4. Circuit selon la revendication 1, dans lequel la capacité du ou des condensateurs de pont de base (C6, C6') vaut 10 à 50 % de la capacité d'un ou plusieurs condensateurs trapèzes (C1).

5. Circuit selon la revendication 1, dans lequel la somme des capacités du ou des condensateurs de pont de base (C6, C6') et d'un ou plusieurs condensateurs trapèzes (C1) vaut entre 680 pF et 2,2 nF.

6. Circuit selon la revendication 1, dans lequel la charge (LA) est une lampe à décharge à basse pression.
